Europäisches Patentamt

European Patent Office

Office européen des brevets

(19)

(11) **EP 1 119 942 B1**

(12) **EUROPÄISCHE PATENTSCHRIFT**

| | |
|---|---|
| (45) Veröffentlichungstag und Bekanntmachung des Hinweises auf die Patenterteilung:<br>**13.08.2003 Patentblatt 2003/33** | (51) Int Cl.$^7$: **H04L 9/08** |
| (21) Anmeldenummer: **99970528.8** | (86) Internationale Anmeldenummer:<br>**PCT/EP99/07051** |
| (22) Anmeldetag: **22.09.1999** | (87) Internationale Veröffentlichungsnummer:<br>**WO 00/022775 (20.04.2000 Gazette 2000/16)** |

(54) **VERFAHREN ZUM ETABLIEREN EINES GEMEINSAMEN KRYPTOGRAFISCHEN SCHÜSSELS FÜR N TEILNEHMER**

METHOD FOR ESTABLISHING A COMMON CRYPTOGRAPHIC KEY FOR N SUBSCRIBERS

PROCEDE PERMETTANT D'ETABLIR UNE CLE CRYPTOGRAPHIQUE COMMUNE A L'INTENTION DE N PARTICIPANTS

| | |
|---|---|
| (84) Benannte Vertragsstaaten:<br>**AT BE CH CY DE DK ES FI FR GB GR IE IT LI LU MC NL PT SE** | • **BURMESTER M ET AL: "A secure and efficient conference key distribution system" ADVANCES IN CRYPTOLOGY - EUROCRYPT '94. WORKSHOP ON THE THEORY AND APPLICATION OF CRYPTOGRAPHIC TECHNIQUES. PROCEEDINGS, PROCEEDINGS OF EUROCRYPT '94, PERUGIA, ITALY, 9-12 MAY 1994, Seiten 275-286, XP000852509 1995, Berlin, Germany, Springer-Verlag, Germany ISBN: 3-540-60176-7 in der Anmeldung erwähnt** |
| (30) Priorität: **09.10.1998 DE 19847941** | |
| (43) Veröffentlichungstag der Anmeldung:<br>**01.08.2001 Patentblatt 2001/31** | |
| (73) Patentinhaber: **Deutsche Telekom AG**<br>**53113 Bonn (DE)** | • **STEINER M ET AL: "Diffie-Hellman key distribution extended to group communication" 3RD ACM CONFERENCE ON COMPUTER AND COMMUNICATIONS SECURITY, PROCEEDINGS OF 3RD ACM CONFERENCE ON COMPUTER AND COMMUNICATIONS SECURITY, NEW DELHI, INDIA, 14-16 MARCH 1996, 1996, Seiten 31-37, XP000620975 New York, NY, USA, USA ISBN: 0-89791-829-0 in der Anmeldung erwähnt** |
| (72) Erfinder: **SCHWENK, Jörg**<br>**91239 Henfenfeld (DE)** | |
| (56) Entgegenhaltungen:<br>**EP-A- 0 768 773     DE-A- 19 649 292**<br><br>• **DAVID A. MCGREW AND ALAN T. SHERMAN: "Key establishment in large dynamic groups using one-way function trees", 20. Mai 1998 (1998-05-20), Seiten 1-13 Verfügbar auf Internet: <http://www.cs.umbc.edu/~sherman/Papers/it se.ps> 23. Juni 1998 XP002126220** | • **STEINER M ET AL: "CLIQUES: a new approach to group key agreement" PROCEEDINGS. 18TH INTERNATIONAL CONFERENCE ON DISTRIBUTED COMPUTING SYSTEMS (CAT. NO.98CB36183), PROCEEDINGS OF 18TH INTERNATIONAL CONFERENCE ON DISTRIBUTED COMPUTING SYSTEMS, AMSTERDAM, NETHERLANDS, 26-29 MAY 1998, Seiten 380-387, XP002126180 1998, Los Alamitos, CA, USA, IEEE Comput. Soc, USA ISBN: 0-8186-8292-2** |

**Beschreibung**

Das erfindungsgemäße Verfahren dient der Erzeugung und dem Etablieren eines gemeinsamen kryptografischen Schlüssels für n Teilnehmer zur Gewährleistung der Geheimhaltung von Nachrichten, die über unsichere Kommunikationskanäle ausschließlich an die n Teilnehmer übertragen werden sollen.

Zum Schutz der Vertraulichkeit und Integrität der Kommunikation zwischen zwei oder mehr Personen werden die Mechanismen der Verschlüsselung und Authentisierung eingesetzt. Diese erfordern allerdings das Vorhandensein einer gemeinsamen Information bei allen Teilnehmern. Diese gemeinsame Information wird als kryptographischer Schlüssel bezeichnet.

Ein bekanntes Verfahren zum Etablieren eines gemeinsamen Schlüssels über unsichere Kommunikationskanäle ist das Verfahren von Diffie und Hellman (DH-Verfahren; vergleiche W. Diffie und M. Hellman, New Directions in Cryptography, IEEETransactions on Information Theory, IT-22(6):644-654, November 1976).

Grundlage des Diffie-Hellmann-Schlüsselaustauschs (DH76) ist die Tatsache, daß es praktisch unmöglich ist, Logarithmen modulo einer großen Primzahl p zu berechnen. Dies machen sich Alice und Bob in dem unten abgebildeten Beispiel zunutze, indem sie jeweils eine Zahl x bzw. y kleiner als p (und teilerfremd zu p-1) geheim wählen. Dann senden sie sich (nacheinander oder gleichzeitig) die x-te (bzw. y-te) Potenz einer öffentlich bekannten Zahl $\alpha$ zu. Aus den empfangenen Potenzen können sie durch erneutes Potenzieren mit x bzw. y einen gemeinsamen Schlüssel K:= $\alpha^{xy}$ berechnen. Ein Angreifer, der nur $\alpha^x$ und $\alpha^y$ sieht, kann daraus K nicht berechnen. (Die einzige heute bekannte Methode dazu bestünde darin, zunächst den Logarithmus z. B. von $\alpha^x$ zur Basis $\alpha$ modulo p zu berechnen und dann $\alpha^y$ damit zu potenzieren.)

| Alice | Bob |
|---|---|
| Wählt x geheim $\alpha^x$ | |
| $\xrightarrow{\hspace{4cm}}$ | |
| $\alpha^y$ | |
| $\xleftarrow{\hspace{4cm}}$ | |
| Bildet K:= $(\alpha^y)^x = \alpha^{xy}$ | Bildet K:= $(\alpha^x)^y = \alpha^{xy}$ |

Beispiel für Diffie-Hellmann-Schlüsselaustausch

Das Problem bei dem im Beispiel beschriebenen DH-Schlüsselaustausch besteht darin, daß Alice nicht weiß, ob sie tatsächlich mit Bob oder mit einem Betrüger kommuniziert. In IPSec wird dieses Problem durch den Einsatz von Public-Key-Zertifikaten gelöst, in denen durch eine vertrauenswürdige Instanz die Identität eines Teilnehmers mit einem öffentlichen Schlüssel verknüpft wird. Dadurch wird die Identität eines Gesprächspartners überprüfbar.

Der DH-Schlüsselaustausch kann auch mit anderen mathematischen Strukturen realisiert werden, z. B. mit endlichen Körpern GF($2^n$) oder elliptischen Kurven. Mit diesen Alternativen kann man die Performance verbessern. Dieses Verfahren ist allerdings nur zur Vereinbarung eines Schlüssels zwischen zwei Teilnehmern geeignet.

Es wurden verschiedene Versuche unternommen, das DH-Verfahren auf drei oder mehr Teilnehmer zu erweitern (Gruppen DH). (Einen Überblick über den Stand der Technik bietet M. Steiner, G. Tsudik, M. Waidner, Diffie-Hellman Key Distribution Extended to Group Communication. Proc. 3rd ACM Conference on Computer and Communications Security, März 1996, Neu Delhi, Indien.)

Eine Erweiterung des DH-Verfahren auf drei Teilnehmer A, B und C wird z. B. durch nachfolgende Tabelle beschrieben. (Berechnung jeweils mod p):

| | | A → B | B → C | C → A |
|---|---|---|---|---|
| 1. | Runde | $g^a$ | $g^b$ | $g^c$ |
| 2. | Runde | $g^{ca}$ | $g^{ab}$ | $g^{bc}$ |

Nach Durchführung dieser beiden Runden kann jeder der drei Teilnehmer den geheimen Schlüssel $g^{abc}$ mod p berechnen.

Bei allen diesen Erweiterungen tritt mindestens eines der drei folgenden Probleme auf

- Die Teilnehmer müssen in einer bestimmten Art und Weise geordnet sein, im obigen Beispiel z. B. als Kreis.

- Die Teilnehmer haben gegenüber der Zentrale keinen Einfluß auf die Auswahl des Schlüssels.
- Die Rundenzahl ist abhängig von der Teilnehmerzahl

Ein weiteres Verfahren zum gemeinsamen Etablieren eines Schlüssels ist aus DE 195 38 385.0 bekannt. Bei diesem Verfahren muß die Zentrale allerdings die geheimen Schlüssel der Teilnehmer kennen.
Unter dem Titel "Key estalishment in large dynamic groups using one-way function trees" von David A. McGrew und Alan T. Sherman wurde bei den IEEE Transaction On Software Engineering ein Artikel vom 20.05 1998 Seite 1 bis 13 eingereicht, der ebenfalls ein Verfahren zum Etablieren eines gemeinsamen kryptografischen Schlüssels für n Teilnehmer vorstellt. Bei diesem Verfahren ist jedem der n Teilnehmer jeweils ein Blatt eines binär strukturierten Baumes zugeordnet, der genau n Blätter und in etwa die Tiefe $\lceil \log_2 n \rceil$ besitzt. Ein Gruppenmanager (Group Manager) verwaltet dabei einen Binärbaum, wobei jeder Knoten x von ihm mit zwei kryptografischen Schlüsseln verknüpft ist, einem Knotenschlüssel kx und einem verdeckten Knotenschlüssel $k'x \approx g(k_x)$. Der verdeckte Knotenschlüssel wird aus dem Knotenschlüssel mit Hilfe einer Einwegfunktion berechnet. Jeder Teilnehmer kennt die unverdeckten Knotenschlüssel auf dem Pfad von seinem Knoten bis zur Wurzel und die verdeckten Knotenschlüssel für die Knoten, die für seinen Pfad zur Root Geschwister sind und sonst keine anderen verdeckten oder unverdeckten Schlüssel. Die Durchführbarkeit dieses Verfahrens beruht offensichtlich darauf, dass der Gruppenmanager alle Blatt-Schlüssel kennt.

Weiterhin ist eine Lösung aus Burmester, Desmedt, A secure and efficient conference key distribution system, Proc. EUROCRYPT'94, Springer LNCS, Berlin 1994 bekannt, bei der zwei Runden zur Generierung des Schlüssels benötigt werden, wobei in der zweiten Runde durch die Zentrale für n Teilnehmer n Nachrichten der Länge p = ca. 1000 Bit gesendet werden müssen.

Bekannt ist auch ein als (n,t)-Threshold-Verfahren bezeichnetes kryptografisches Verfahren. Mit einem (n,t)-Threshold-Verfahren kann man einen Schlüssel k so in t Teile, die shadows genannt werden, zerlegen, daß dieser Schlüssel k aus je n der t shadows rekonstruiert werden kann (vgl. Beutelspacher, Schwenk, Wolfenstetter: Moderne Verfahren der Kryptographie (2. Auflage), Vieweg Verlag, Wiesbaden 1998).

Das vorliegende Verfahren soll das Etablieren eines gemeinsamen Gruppenschlüssels zwischen einer Zentrale und einer Gruppe von n Teilnehmern ermöglichen . Das Verfahren soll so ausgebildet werden, daß auch nach dem Etablieren des Gruppenschlüssels ohne großen Aufwand Teilnehmer aus dem Schlüsselverzeichnis gelöscht oder hinzugefügt werden können.

Die Aufgabenstellung wird durch ein Verfahren gelöst, bei dem, wie bereits bekannt, das Etablieren eines Gruppenschlüssels mit Hilfe einer Baumstruktur vorgenommen wird. Dazu wird, wie ebenfalls bereits bekannt, die Anzahl der an der Schlüsselvereinbarung beteiligten Teilnehmer n als binärer Baum mit n Blättern dargestellt. Für jede natürliche Zahl n gibt es dabei eine oder mehrere Darstellungen dieser Art. Die Anzahl der Blätter ist dabei mit der Anzahl der in das Verfahren einbezogenen Teilnehmer identisch. Das bedeutet, daß wie bereits bekannt, einer Anzahl von n Teilnehmern eine Anzahl von n Blätter eines binären Baumes mit der Tiefe $\lceil \log_2 n \rceil$ zugeordnet ist.

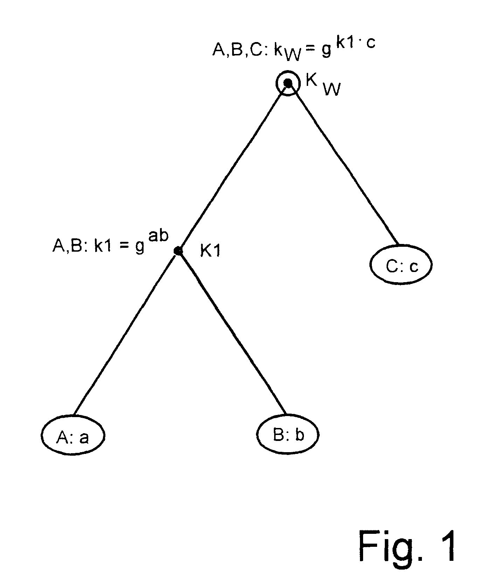

Fig. 1 zeigt das Wirkprinzip des erfindungsgemäßen Verfahrens anhand der Baumstruktur einer Schlüsselvereinbarung für drei Teilnehmer A, B, C
Um einen gemeinsamen Schlüssel zu etablieren, gehen die Teilnehmer A, B und C wie folgt vor:

- Teilnehmer A und B führen ein DH-Verfahren mit nach dem Zufallsprinzip generierten Zahlen a und b durch. Sie erhalten den gemeinsamen Schlüssel k1=$g^{ab}$ mod p, der dem gemeinsamen Knoten K1 zugeordnet wird.
- Teilnehmer A und B auf der einen und Teilnehmer C auf der anderen Seite führen ein zweites DH-Verfahren durch, welches auf dem gemeinsamen Schlüssel k1 der Teilnehmer A und B und auf einer nach dem Zufallsprinzip generierten Zahl c des Teilnehmers C beruht. Das Ergebnis ist der gemeinsame Schlüssel k=$g^{k1\cdot c}$ mod p, der der Wurzel des Baumes $K_W$ zugeordnet wird.

Das erfindungsgemäße Verfahren wird anhand von Ausführungsbeispielen näher erläutert.
In Fig. 2 ist die Baumstruktur für eine Schlüsselvereinbarung für vier Teilnehmer A, B, C und D dargestellt.
Fig 3 zeigt die Baumstruktur einer Schlüsselvereinbarung für 5 Teilnehmer A, B, C, D und E.
Fig. 4 zeigt, ausgehend von einer bereits bestehenden Baumstruktur nach Fig.2, ein Beispiel für die Erweiterung der Baumstruktur um einen Teilnehmer.
Fig. 5 zeigt, ausgehend von einer bereits bestehenden Baumstruktur nach Fig. 2, das Entfernen/Löschen eines Teilnehmers aus der Baumstruktur.

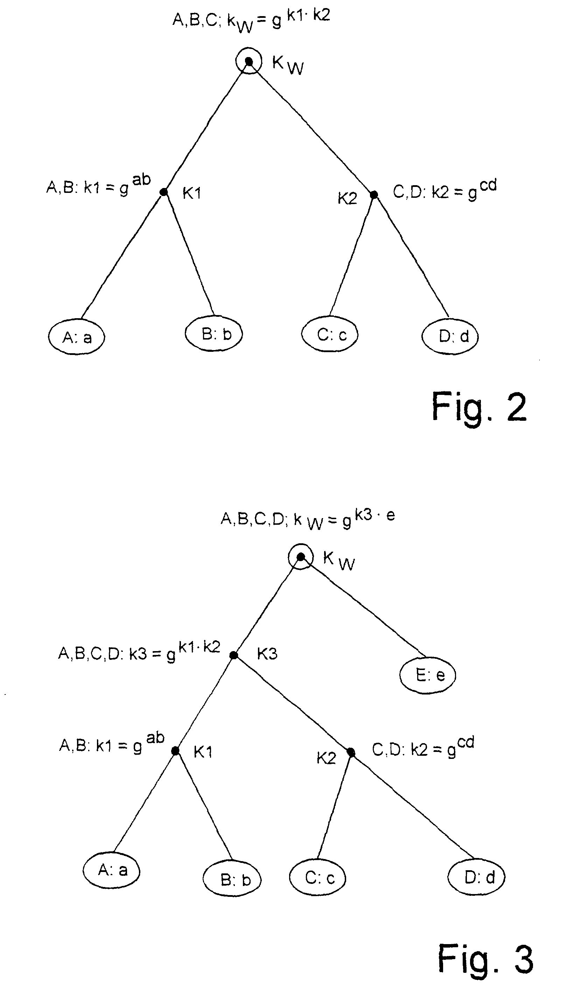

Nachfolgend wird anhand von Figur 2 ein Beispiel einer Schlüsselvereinbarung für vier Teilnehmer A, B, C und D beschrieben:
Um einen gemeinsamen Schlüssel für vier Teilnehmer (Fig.2) zu etablieren, gehen Teilnehmer A, B, C und D wie folgt vor:

- Teilnehmer A und B führen ein DH-Verfahren mit nach dem Zufallsprinzip generierten Zahlen a und b durch. Sie erhalten den gemeinsamen Schlüssel k1=$g^{ab}$ mod p.

- Teilnehmer C und D führen ein DH-Verfahren mit zufällig gewählten Zahlen c und d durch. Sie erhalten den gemeinsamen Schlüssel k2=$g^{cd}$ mod p.
- Teilnehmer A und B auf der einen und Teilnehmer C und D auf der anderen Seite führen gemeinsam ein zweites DH-Verfahren durch, in welches von Teilnehmer A und B der Schlüssel k1 und von Teilnehmer C und D der Schlüssel k2 einbezogen werden. Das Ergebnis ist der gemeinsame Schlüssel $k_W$=$g^{k1 \cdot k2}$ mod p, welcher der Wurzel des Baumes $K_W$ zugeordnet ist.

Nachfolgend wird anhand von Figur 3 ein Beispiel einer Schlüsselvereinbarung für fünf Teilnehmer A, B, C, D, und E beschrieben:
Um einen gemeinsamen Schlüssel zu etablieren, gehen die Teilnehmer A, B, C, D und E wie folgt vor:

- Teilnehmer A und B führen ein DH-Verfahren mit zufällig gewählten Zahlen a und b durch. Sie erhalten den gemeinsamen Schlüssel k1=$g^{ab}$ mod p.
- Teilnehmer C und D führen ein DH-Verfahren mit zufällig gewählten Zahlen c und d durch. Sie erhalten den gemeinsamen Schlüssel k2=$g^{cd}$ mod p.
- Teilnehmer A und B auf der einen Seite und Teilnehmer C und D auf der anderen Seite führen gemeinsam ein zweites DH-Verfahren durch, in welches von Teilnehmer A und B der gemeinsame Schlüssel k1 und von Teilnehmer C und D der gemeinsame Schlüssel k2 einbezogen werden.. Das Ergebnis ist ein gemeinsamer Schlüssel k3=$g^{k1 \cdot k2}$ mod p für die Teilnehmer A, B, C und D.
- Die Teilnehmer A, B, C und D auf der einen Seite und der Teilnehmer E auf der anderen Seite führen ein drittes DH-Verfahren durch, in welches der gemeinsame Schlüssel k3 der Teilnehmer A, B, C und D und eine für den Teilnehmer E generierte Zufallszahl e einbezogen werden. Das Ergebnis ist der gemeinsame Schlüssel $k_W$=$g^{k3 \cdot e}$ mod p, der der Wurzel des Baumes $K_W$ zugeordnet ist.

Aufgrund der Struktur des erfindungsgemäßen Verfahrens ist es möglich, neue Teilnehmer mit einzubeziehen bzw einzelne Teilnehmer auszuschließen, ohne das ganze Verfahren für jeden Teilnehmer noch einmal durchführen zu müssen.

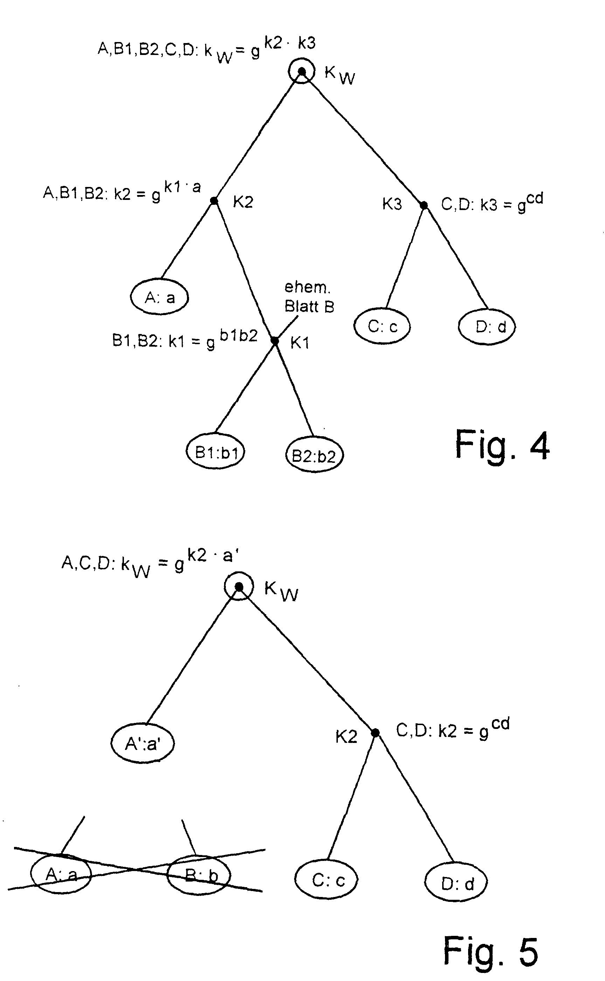

Das Einfügen eines neuen Teilnehmers wird anhand einer Baumstruktur mit vier Teilnehmern nach Fig. 4 näher erläutert: Ausgangssituation ist dabei eine Baumstruktur entsprechend Fig. 2 in welche eine neuer Teilnehmer bei Blatt B eingefügt werden soll.
Bei Hinzunahme eines neuen Teilnehmers in eine bereits bestehende Baumstruktur, die über ein gemeinsames Geheimnis verfügt, werden zum Etablieren eines neuen gemeinsamen Schlüssels für n+1 Teilnehmer an einer geeigneten Stelle des binären Baumes (Blatt B vorgegeben) zwei neue Blätter B1 und B2 angefügt. Der neue Baum besitzt dann n+1 Blätter und die Tiefe $\lceil \log_2(n+1) \rceil$. Der bisher dem Blatt B zugeordnete Teilnehmer wird einem der neue Blätter B1 zugeordnet. Der neue Teilnehmer wird dem anderen noch freien Blatt B2 zugeordnet. Das bisherige Blatt B wird zu einem Knoten K1 für die Blätter B1 und B2. Ausgehend von den neuen Blättern B1 und B2 werden bis hin zur Wurzel des Baumes nur in den Knoten K neue Geheimnisse etabliert, die im Rahmen der Baumstruktur auf dem Weg von den neuen Blättern B1 und B2 zur Wurzel des Baumes $K_W$ liegen. Das sind im konkreten Fall die Knoten K1, K2 und $K_W$.

Ist die Anzahl der Teilnehmer eine Zweierpotenz, so erhöht sich die Tiefe des Baumes durch diesen Vorgang um 1 (vgl. vorhergehendes Beispiel). Ist die Anzahl der Teilnehmer keine Zweierpotenz, so kann durch geschickte Wahl des aufzuteilenden Blattes eine Vergrößerung der Tiefe vermieden werden, wie das folgende Beispiel zeigt:

Um beispielsweise einen vierten Teilnehmer zu drei Teilnehmern hinzuzufügen, geht man (ausgehend von der Situation nach Fig. 1) wie folgt vor:

- Teilnehmer C führt mit dem neu hinzugekommenen Teilnehmer D ein DH-Verfahren mit zufällig generierten Zahlen c und d durch (c sollte sich von dem vorher gewählten c unterscheiden, dies muß aber nicht der Fall sein). Das Ergebnis ist k2 =$g^{c'd}$ mod p.
- Teilnehmer A und Teilnehmer B auf der einen und Teilnehmer C und D auf der anderen Seite führen ein DH-Verfahren mit den Werten k1 und k2 durch. Das Ergebnis ist k=$g^{k1 \cdot k2'}$ mod p.

Bei einer derartigen Konfiguration müssen die Teilnehmer A und B keinen neuen Schlüsseltausch durchführen. Generell müssen nur die Geheimnisse neu vereinbart werden, die im zugehörigen Baum auf dem Weg vom Blatt des neuen Teilnehmers zur Wurzel $K_W$ liegen.

Das Ausschließen bzw. Löschen eines Teilnehmers wird anhand einer Baumstruktur mit vier Teilnehmern anhand von Figur 5 näher erläutert: Ausgangssituation ist dabei eine Baumstruktur entsprechend Fig. 2, aus der Teilnehmer B entfernt werden soll.
Beim Ausschließen bzw. beim Löschen eines Teilnehmers B aus einer bereits bestehenden Baumstruktur, die über ein gemeinsames Geheimnis verfügt, werden wie in Fig. 5 ausgeführt, sowohl das Blatt des zu entfernenden Teilnehmers B als auch das Blatt des dem gleichen gemeinsamen Knoten K1 zugeordneten Teilnehmers A entfernt. Der gemeinsame Knoten K1 wird zum neuen Blatt A' des in der Baumstruktur verbleibenden Teilnehmers A. Ausgehend von den Blättern des Baumes bis zur Wurzel $K_W$ werden nur in den Knoten K neue Geheimnisse etabliert, die vom neuen Blatt A' im Rahmen der Baumstruktur in Richtung Wurzel $K_W$ unmittelbar tangiert werden. Das ist im konkreten Fall nur der Wurzelknoten $K_W$. Bei einer derartigen Konfiguration müssen die Teilnehmer C und D keinen neuen Schlüsseltausch durchführen. Generell müssen auch hier nur die Geheimnisse neu vereinbart werden, die im zugehörigen Baum auf dem Weg vom Blatt des Partners des entfernten Teilnehmers zur Wurzel liegen.

Das Verfahren kann in vielfacher Hinsicht zweckmäßig weiter ausgestaltet werden:

Für die Bildung der diskreten Exponentialfunktion $x \rightarrow g^x$ bietet sich beispielsweise die Verwendung anderer Gruppen an.

Beim Hinzufügen oder Entfernen eines Teilnehmers kann beispielsweise vereinbart werden, daß für die notwendigen neuen Durchführungen des DH-Verfahrens nicht die alten Geheimnisse, sondern das Ergebnis einer (evtl. randomisierten ) Einwegfunktion verwendet wird.

**Patentansprüche**

1. Verfahren zum Etablieren eines gemeinsamen kryptografischen Schlüssels für n Teilnehmer unter Anwendung des an sich bekannten DH-Verfahrens, bei dem jedem der n Teilnehmer (I) jeweils ein Blatt eines binär strukturierten Baumes, der genau n Blätter und in etwa die Tiefe $\lceil \log_2 n \rceil$ besitzt, zugeordnet wird,
   **dadurch gekennzeichnet,**

   - **daß** jeder Teilnehmer (I) selbst ein Geheimnis (i) generiert und dieses dem Blatt des Baumes zugeordnet wird, dem auch der jeweilige Teilnehmer (I) zugeordnet ist,
   - **daß** nacheinander in Richtung der Baumwurzel für alle Knoten (K) des Baumes Geheimnisse etabliert werden, wobei ausgehend von den Blättern entsprechend der festgelegten Baumstruktur über die gesamte Hierarchie der Baumstruktur immer zwei bereits bekannte Geheimnisse über das DH-VerFahren zu einem neuen gemeinsamen Geheimnis zusammengefaßt und einem gemeinsamen Knoten (K) zu geordnet werden, so daß der letzte Knoten $K_w$ und damit die Baumwurzel als Geheimnis den gemeinsamen Schlüssel aller n Teilnehmer enthält.

2. Verfahren nach Anspruch 1, **dadurch gekennzeichnet,**

   - **daß** bei Aufnahme eines neuen Teilnehmers in eine bestehende Baumstruktur, die bereits über ein gemeinsames Geheimnis verfügt, zum Etablieren eines gemeinsamen Schlüssels für n+1 Teilnehmer an geeigneter Stelle des binären Baumes einem Blatt (B) als Nachfolger zwei neue Blätter (B1 und B2) angefügt werden, so daß der neue Baum genau n+1 Blätter und die Tiefe $\lceil \log_2(n+1) \rceil$ besitzt,
   - **daß** der dem bisherigen Blatt (B) zugeordnete Teilnehmer und der neue Teilnehmer jeweils einem der neuen Blätter (B1; B2) zugeordnet werden, wobei das bisherige Blatt B zu einem gemeinsamen Knoten für die neuen Blätter (B1;B2) wird,
   - **daß** ausgehend von den neuen Blättern (B 1;B2) bis zur Wurzel des Baumes nur in den Knoten neue Geheimnisse etabliert werden, die im Rahmen der Baumstruktur auf dem Weg von den Blättern B1 und B2 zur Baumwurzel liegen.

3. Verfahren nach Anspruch 1, **dadurch gekennzeichnet,**

   - **daß** bei Ausschließung eines Teilnehmers (B) aus einer bereits bestehenden Baumstruktur, die bereits über ein Geheimnis verfügt, sowohl das Blatt des zu entfernenden Teilnehmers (B), als auch daß Blatt des dem gleichen gemeinsamen Knoten zugeordneten Teilnehmers (A) entfernt werden,
   - **daß** der gemeinsame Knoten zum Blatt des nicht zu entfernenden Teilnehmers A wird, und daß ausgehend von den Blättern des Baumes bis zur Wurzel nur in den Knoten neue Geheimnisse ertabliert werden, die im Rahmen der Baumstruktur auf dem Weg vom neuen Blatt (A) zur Baumwurzel liegen.

**Claims**

1.  Method for establishing a common cryptographic key for n subscribers using the known DH method in which each of the n subscribers (I) is associated with a leaf of a binary-structured tree having precisely n leaves and approximately the depth [$\log_2 n$],

    **characterized in that**

    - each subscriber (I) themself generates a secret (i), said secret (i) being associated with that leaf of the tree with which the respective subscriber (I) is also associated;
    - secrets are established one after the other in the direction of the tree root for all nodes (K) of the tree, wherein, starting from the leaves according to the specified tree structure over the entire hierarchy of the tree structure, two already known secrets at a time are combined using the DH method to form one new common secret and are associated with a common node (K), with the result that the last node $K_W$ and therefore the tree root contains as the secret the common key of all n subscribers.

2.  Method according to claim 1, **characterized in that**

    - when a new subscriber is included in an existing tree structure already having a common secret, in order to establish a common key for n+1 subscribers, two new leaves (B1 and B2) are added to a leaf (B) as successors at a suitable point of the binary tree, with the result that the new tree has precisely n+1 leaves and the depth [$\log_2(n+1)$];
    - the subscriber associated with the previous leaf (B) and the new subscriber are each associated with one of the new leaves (B1; B2), the previous leaf B becoming a common node for the new leaves (B1; B2);
    - starting from the new leaves (B1; B2) as far as the root of the tree, new secrets are established only in those nodes which are situated within the framework of the tree structure on the path from the leaves B1 and B2 to the tree root.

3.  Method according to claim 1, **characterized in that**

    - when a subscriber (B) is excluded from an already existing tree structure already having a secret, both the leaf of the subscriber (B) to be removed and also the leaf of the subscriber (A) associated with the same common node are removed;
    - the common node becomes the leaf of the subscriber A who is not to be removed, wherein, starting from the leaves of the tree as far as the root, new secrets are established only in those nodes which are situated within the framework of the tree structure on the path from the new leaf (A) to the tree root.

**Revendications**

1.  Procédé pour l'établissement d'une clé cryptographique commune à n abonnés avec utilisation du procédé DH connu en soi dans lequel chacun des n abonnés (I) se voit attribuer une feuille d'une arborescence à structure binaire laquelle possède précisément n feuilles et présente approximativement la profondeur $\lceil \log_2 n \rceil$,
    **caractérisé en ce que**

    - chaque abonné (I) génère lui-même un secret (i) et affecte celui-ci à la feuille de l'arborescence à laquelle cet abonné (I) est affecté
    - des secrets sont établis l'un après l'autre en direction de la racine de l'arborescence pour tous les noeuds (K) de l'arborescence, toujours deux secrets déjà connus étant regroupés en un nouveau secret commun via un procédé DH à partir des feuilles conformément à l'arborescence définie sur toute la hiérarchie de l'arborescence et affectés à un noeud commun (K) de telle façon que le dernier noeud $K_W$ et donc la racine contienne, comme secret, la clé commune à tous les n abonnés.

2.  Procédé selon revendication 1, **caractérisé en ce que**

    - lors de l'inclusion d'un nouvel abonné dans une arborescence existante disposant déjà d'un secret commun, afin d'établir une clé commune pour n+1 abonnés à l'endroit approprié de l'arborescences binaire, deux nouvelles feuilles (B1 et B2) sont ajoutées à une feuille (B) en tant que descendantes, de sorte que la nouvelle arborescence possède précisément n+1 feuilles et présente la profondeur $\lceil \log_2(n+1) \rceil$,

- l'abonné affecté à l'ancienne feuille (B) et le nouvel abonné sont affectés à l'une des nouvelles feuilles (B1 ; B2), l'ancienne feuille B devenant un noeud commun aux nouvelles feuilles (B1 ; B2),
- à partir des nouvelles feuilles (B1;B2) jusqu'à la racine de l'arborescence, de nouveaux secrets, situés sur le chemin entre les feuilles B1 et B2 et la racine dans le cadre de l'arborescence, sont établis uniquement dans les noeuds.

3. Procédé selon revendication 1, **caractérisé en ce que**
   en cas d'exclusion d'un abonné (B) d'une arborescence déjà existante disposant déjà d'un secret, aussi bien la feuille de l'abonné à retirer (B) que la feuille de l'abonné (A) affecté au même noeud commun sont retirées,

- le noeud commun devient la feuille de l'abonné A qui n'est pas à retirer et **en ce qu'**à partir des feuilles de l'arborescence jusqu'à la racine, de nouveaux secrets, situés sur le chemin entre la nouvelle feuille (A) et la racine dans le cadre de l'arborescence, sont établis uniquement dans les noeuds.

$A,B,C: k_W = g^{k1 \cdot c}$

$K_W$

$A,B: k1 = g^{ab}$  $K1$

$C: c$

$A: a$

$B: b$

Fig. 1

$$A,B,C; \; k_W = g^{k1 \cdot k2}$$

Fig. 2

$$A,B,C,D; \; k_W = g^{k3 \cdot e}$$

Fig. 3

A,B1,B2,C,D: $k_W = g^{k2 \cdot k3}$

$K_W$

A,B1,B2: $k2 = g^{k1 \cdot a}$

K2

K3    C,D: $k3 = g^{cd}$

A: a

ehem.
Blatt B

B1,B2: $k1 = g^{b1b2}$   K1

C: c

D: d

B1:b1

B2:b2

# Fig. 4

A,C,D: $k_W = g^{k2 \cdot a'}$

$K_W$

A':a'

K2   C,D: $k2 = g^{cd}$

A: a

B: b

C: c

D: d

# Fig. 5